# EUROPÄISCHE PATENTANMELDUNG

(11) **EP 1 705 961 A2**
(43) Veröffentlichungstag der Anmeldung: **27.09.2006**
(21) Anmeldenummer: 06001634.2
(22) Anmeldetag: 26.01.2006
(51) Int. Cl.: H05B 41/282

(54) **Schaltungsanordnung und Verfahren zum Betreiben von Lampen**

(30) Priorität: 17.02.2005 DE 102005007346
(71) Anmelder: Patent-Treuhand-Gesellschaft für elektrische Glühlampen mbH, 81543 München (DE)
(72) Erfinder: Rudolph, Bernd, 85659 Forstern (DE)
(74) Vertreter: Raiser, Franz

(57) **Zusammenfassung**

Schaltungsanordnung mit einem freischwingenden Halbbrückenwechselrichter zum Betreiben von Gasentladungslampen. Durch eine Stoppeinrichtung wird die Ansteuerung der Halbbrücken-Schalter nur während einer Ein-Zeit freigeschaltet. Durch die Dauer der Ein-Zeit kann die Schwingfrequenz des Halbbrückenwechselrichter eingestellt werden. Damit ist eine Regelung von Lampen-Betriebsgrößen möglich.

## Beschreibung

### Technisches Gebiet

Die Erfindung betrifft eine Schaltungsanordnung und ein Verfahren zum Betreiben von Lampen. Es handelt sich dabei insbesondere um selbstschwingende Halbbrücken-Wechselrichter deren Schwingfrequenz durch die Erfindung regel- oder einstellbar ist.

Die Erfindung betrifft hauptsächlich den Betrieb von Niederdruck-Gasentladungslampen, da Betriebsgeräte für diese Lampen starkem Kostendruck unterliegen. Bis auf Aspekte, die die Vorheizung betreffen, ist die Erfindung auch auf Betriebsgeräte für Hochdruck-Gasentladungslampen anwendbar. Die Erfindung ist auch anwendbar auf andere Lichtquellen wie LED.

### Stand der Technik

In der Schrift Fengfeng Tao, et al.,"Self-Oscillating Electronic Ballast with Dimming Controll", Power Electronics Specialists Conference, 2001, IEEE, USA, ist ein selbstschwingender Halbbrückenwechselrichter beschrieben. Figur 2 dieser Schrift zeigt einen bekannten Halbbrückenwechselrichter mit einem Rückkoppelübertrager. Die elektronischen Schalter sind dort als MOSFET ausgeführt.

Der angesprochene Halbbrückenwechselrichter ist als Schaltungsanordnung zum Betrieb von Lampen weit verbreitet, da er mit weinigen, kostengünstigen Bauelementen auskommt und zuverlässig arbeitet. Ein Nachteil dieser Schaltungsanordnung ist darin begründet, dass sich die Schwingfrequenz des Halbbrückenwechselrichters durch die verwendete Rückkoppeleinrichtung ergibt und zunächst keine Möglichkeit besteht die Schwingfrequenz zu beeinflussen. Dies ist besonders bei Halbbrückenwechselrichtem mit Bipolartransistoren der Fall, da Bipolartransistoren mit hohen Strömen angesteuert werden, die sich nur aufwändig beeinflussen lassen.

Eine Einstellmöglichkeit für die Schwingfrequenz bietet folgende Vorteile:
■ Die Schwingfrequenz des Halbbrückenwechselrichters lässt sich zur Regelung Lampenstroms oder der Lampenleistung einsetzen.
■ Die Vorheizung von Lampenwendeln kann durch die Schwingfrequenz eingestellt werden.
■ Der Zündvorgang von Lampen durch Resonanzzündung kann mit Hilfe der Schwingfrequenz geregelt werden.
■ Die Schwingfrequenz des Halbbrückenwechselrichters lässt sich in Abhängigkeit einer Temperatur einstellen, womit bei einer hohen Umgebungstemperatur oder ungünstigen Einbaubedingungen die Lampenleistung und damit die Verlustleistung reduziert werden können.

Der erste Punkt der obigen Aufzählung wird von der angeführten Schrift behandelt. Es wird vorgeschlagen, dem Rückkoppelübertrager einen Ansteuerübertrager nach zu schalten. Die Schwingfrequenz wird nun durch die Einspeisung eines konstanten Stroms in den Ansteuerübertrager beeinflusst. Der eingespeiste Strom überlagert dem Magnetisierungsstrom des Ansteuerübertragers und macht somit die Schwingfrequenz einstellbar. Diese Lösung hat den Nachteil, dass die Schwingfrequenz von den magnetischen Eigenschaften des Ansteuerübertragers abhängt. Da diese nur ungenau reproduzierbar sind, ist diese Lösung für eine Serienfertigung nicht geeignet. Auch fehlt der vorgeschlagenen Lösung eine geschlossene Regelschleife für Lampenparameter wie Lampenstrom und Lampenleistung.

Auch die Schriften US 4,525,648 (De Bijl) und US 6,346,779 (Aiello) schlagen selbstschwingende Halbbrückenwechselrichter mit einer Eingriffsmöglichkeit zur Beeinflussung der Schwingfrequenz vor. Aber auch diese Schriften zeigen keine Regelung von Lampenparametern wie Lampenstrom oder Lampenleistung.

### Darstellung der Erfindung

Es ist Aufgabe der vorliegenden Erfindung, eine Schaltungsanordnung bereitzustellen, die einen selbstschwingenden Halbbrückenwechselrichter zum Betrieb von Lampen bereit zu stellen, bei dem die Schwingfrequenz zuverlässig einstellbar ist.

Weiterhin ist es eine Aufgabe der vorliegenden Erfindung einen selbstschwingenden

Halbbrückenwechselrichter zum Betrieb von Lampen bereit zu stellen bei dem ein Lampenparameter durch Einstellen der Schwingfrequenz regelbar ist.

Weiterhin ist es eine Aufgabe der vorliegenden Erfindung ein Verfahren anzugeben, das mit Hilfe einer Schaltungsanordnung, die einen selbstschwingenden Halbbrückenwechselrichter enthält, eine Lampe zu Starten und zu Betreiben, wobei der Start zumindest eine kontrollierte Zündung der Lampe umfasst.

Im wesentlichen besteht die erfindungsgemäße Lösung der oben gestellten Aufgaben darin, dass die Schaltungsanordnung eine Stopp-Einrichtung enthält, die das Einschalten der elektronischen Schalter des Halbbrückenwechselrichter unterbinden kann und nur während einer Ein-Zeit frei gibt. Vorteilhaft ist die Ein-Zeit abhängig von einem Lampenparameter, wodurch sich ein Regelkreis schliessen kann.

Im einzelnen umfasst eine erfindungsgemäße Schaltungsanordnung folgende Merkmale:
- Halbbrückenanordnung, die einen oberen und einen unteren elektronischen Schalter aufweist, die in Serie geschaltet sind, jeweils einen Steueranschluss aufweisen und an ihren Verbindungspunkt einen Mittelpunkt bilden,
- am Mittelpunkt ist ein Lastkreis angeschlossen in den ein Laststrom fließt,
- der Lastkreis enthält ein Reaktanznetzwerk mit einer Resonanzfrequenz, an das eine Lampe anschließbar ist,
- der Lastkreis ist so bemessen, dass in einem Normalbetrieb für eine angeschlossene Lampe nach dem Öffnen eines elektronischen Schalters die Spannung am jeweils anderen elektronischen Schalter nach einer Umschwing-Zeit zu Null wird,
- die Schaltungsanordnung umfasst eine Rückkoppeleinrichtung, die eine Rückkoppel-Größe aus dem Lastkreis derart mit den Steueranschlüssen der elektronischen Schalter koppelt, dass die elektronischen Schalter abwechselnd eingeschaltet werden,
- die Schaltungsanordnung umfasst eine Stopp-Einrichtung, die mit den Steueranschlüssen der elektronischen Schalter gekoppelt ist und einen Eingang aufweist an dem ein Stoppsignal anliegt, wobei die Stopp-Einrichtung ein Einschalten der elektronischen Schalter verhindert, solange das Stoppsignal einen Aus-Zustand aufweist,
- die Schaltungsanordnung umfasst einen Timer, der mit dem Eingang der Stopp-Einrichtung gekoppelt ist und das Stoppsignal bereitstellt, das einen Ein-Zustand und den Aus-Zustand annehmen kann,
- die Schaltungsanordnung umfasst eine Triggereinrichtung, die jeweils nach Ablauf der Umschwing-Zeit ein Triggersignal an den Timer abgibt, spätestens jedoch, wenn der Laststrom zu Null wird.

Der Lastkreis der am Mittelpunkt angeschlossen ist weist im allgemeinen eine Lampendrossel und einen Resonanzkondensator auf. Diese Bauelemente und weitere Bauelemente des Reaktanznetzwerks sind so aufeinander abgestimmt, dass sich bei einem Schaltvorgang eine Einschalt-Entlastung des jeweils einschaltenden elektronischen Schalters ergibt. Dies wird dadurch erreicht, dass nach dem Ausschalten eines elektronischen Schalters die Energie einer Drossel, wie z. B. der Lampendrossel, Kapazitäten, wie z.B. parasitäre Schalterkapazitäten oder sog. Snubber-Kondensatoren, umlädt, damit sich am jeweils einzuschaltenden elektronischen Schalter eine Spannung einstellt, die idealerweise Null ist. Meist wird diese Spannung durch sog. Freilaufdioden geklemmt. Dieser Vorgang spielt sich für eine Schaltungsanordnung nur dann sicher ab, wenn die Schaltungsanordnung in einem Normalbetrieb arbeitet. Dies bedeutet, dass sich die Schaltungsanordnung nicht gerade in einem Übergangzustand befindet, wie er beispielsweise durch Abklemmen einer Lampe oder Durchschlag einer Lampe ausgelöst wird. Vom Zeitpunkt des Ausschaltens eines elektronischen Schalters bis zum dem Zeitpunkt, an dem die Spannung am anderen elektronischen Schalter zu Null wird, wird eine Umschwing-Zeit definiert. Nach der Umschwing-Zeit ist ein spannungsfreies und damit entlastetes Einschalten des anderen elektronischen Schalters möglich.

Die Rückkoppeleinrichtung umfasst im allgemeinen eine magnetische Kopplung einer Rückkoppelgröße vom Lastkreis zu den Steueranschlüssen der elektronischen Schalter. Weit verbreitet ist der Einsatz eines Stromtransformators, der primärseitig den Laststrom erfasst und mit jeweils einer Sekundärwicklung die elektronischen Schalter steuert. Bekannt ist auch, dass die Primärwicklung auf die Lampendrossel aufgebracht ist. Weiterhin sind auch Ausführungsformen bekannt, bei denen nicht der Laststrom sondern eine Lastspannung für die Rückkopplung erfasst wird.

Gemeinsam ist all diesen Schaltungen, dass die Rückkoppelgröße einen elektronischen Schalter idealerweise entlastet einschaltet und dieser eingeschaltete Zustand in einer Mitkoppelschleife erhalten bleibt, bis keine Rückkoppelgröße mehr an den Steuereingang des elektronischen Schalters gelangt. Im wesentlichen kommen im Stand der Technik dafür zwei Mechanismen in Betracht: Der Lastkreis bewirkt durch resonante Vorgänge ein Umpolen der Rückkoppelgröße oder die Rückkoppeleinrichtung unterbricht die Übertragung der Rückkoppelgröße beispielsweise wegen der Sättigung eines Rückkoppelübertragers.

Erfindungsgemäß wird der Zeitpunkt, zu dem die elektronischen Schalter ein- und ausgeschaltet werden im wesentlichen nicht mehr von der Rückkoppeleinrichtung bestimmt. Sie liefert zwar noch die Energie zur Ansteuerung der elektronischen Schalter, jedoch bestimmt eine Stopp-Einrichtung eine Ein-Zeit, in der eine Ansteuerung der elektronischen Schalter überhaupt möglich ist. Mit Hilfe der Ein-Zeit kann erfindungsgemäß die Schwingfrequenz des Halbbrückenwechselrichters bestimmt werden.

Ein Timer steuert die Stopp-Einrichtung über einen Eingang an dem der Timer ein Stoppsignal einspeist. Solange der Timer das Stoppsignal in einem Aus-Zustand sendet, ist die Ansteuerung der elektronischen Schalter durch die Rückkoppeleinrichtung unterbunden. Vorteilhaft besitzt eine erfindungsgemäße Schaltungsanordnung nur eine Stopp-Einrichtung, die für beide elektronischen Schalter der Halbbrückenanordnung gleichermaßen wirkt. Während der Ein-Zeit sendet der Timer das Stoppsignal in einem Ein-Zustand und gibt damit die Ansteuerung der elektronischen Schalter durch die Rückkoppeleinrichtung frei.

Den Beginn der Ein-Zeit bestimmt eine Triggereinrichtung mit Hilfe eines Triggersignals, das sie an den Timer sendet. Sobald der Timer ein Triggersignal empfängt schaltet er das Stoppsignal für die Dauer der Ein-Zeit in den Ein-Zustand. Die Triggereinrichtung leitet das Triggersignal aus Kenngrößen des Lastkreises ab. Der früheste Zeitpunkt zum absenden eines Triggersignals ist das Ende der oben beschriebenen Umschwing-Zeit. Ab diesem Zeitpunkt ist ein entlastetes Einschalten des elektronischen Schalters möglich, der als nächster in der Halbbrückenanordnung den Laststrom tragen soll. Diesem Zeitpunkt schließt sich eine Freilaufphase an, in der der Laststrom von den oben genannten Freilaufdioden getragen wird. Die Freilaufphase endet, wenn die Polarität des Laststroms wechselt; d. h. einen Nulldurchgang aufweist. Ab dem Nulldurchgang muss der elektronische Schalter den Laststrom tragen. Falls kein lückender Betrieb angestrebt wird, muss spätestens dann die Triggereinrichtung ein Triggersignal an den Timer schicken. Zusammenfassend gesagt, soll das Triggersignal in der Freilaufphase gesendet werden. Dabei sollte beachtet werden, dass wegen der sog. dynamischen Sättigungsspannung bei Bipolartransistoren die Leitend-Verluste nach dem Einschalten nicht sofort optimal sind. Das Triggersignal sollte deshalb im Hinblick auf eine Reduzierung der Transistorverluste eine gewisse Zeit vor Ablauf der Freilaufphase gesendet werden.

Über die Ein-Zeit kann wie gesagt die Schwingfrequenz des Halbbrückenwechselrichters eingestellt werden. Soll eine elektrische Ausgangsgröße der Schaltungsanordnung, wie die Lampenleistung oder der Lampenstrom geregelt werden, so ist vorteilhaft die Ein-Zeit abhängig von der zur regelnden Größe. Diese Größe wird im allgemeinen von einer Messeinrichtung erfasst und als Regelgröße dem Timer bereitgestellt. Der Timer stellt die Ein-Zeit in Abhängigkeit der Regelgröße ein womit sich ein Regelkreis schließt. Steigt beispielsweise der Lampenstrom an, so verkürzt der Timer die Ein-Zeit, wodurch die Schwingfrequenz des Halbbrückenwechselrichters ansteigt und den Lampenstrom wieder reduziert.

Der angesprochene Regelkreis darf allerdings nur in einem Brennbetrieb geschlossen sein. Dem Brennbetrieb, in dem eine angeschlossene Lampe sachgemäß betrieben wird, geht ein Startbetrieb voraus. Der Startbetrieb ist nötig, um in der Lampe eine Gasentladung zu starten. Er umfasst zumindest einen Zündbetrieb, in dem eine Zündspannung an der Lampe erzeugt wird.

Im Startbetrieb kann der Regelkreis nicht arbeiten, da keine sinnvolle Regelgröße zur Verfügung steht. Deshalb wird der erfindungsgemäßen Schaltungsanordnung vorteilhaft ein Wahlschalter zugefügt, der von einer Ablaufsteuerung gesteuert wird. Die Ablaufsteuerung stellt den Wahlschalter zunächst im Startbetrieb so ein, dass der Eingang des Timers der verantwortlich für die Einstellung der Ein-Zeit ist, mit einer ersten Einrichtung zur Zeitvorgabe gekoppelt ist. Die erste Einrichtung zur Zeitvorgabe bestimmt über den Timer eine feste Ein-Zeit, die so gewählt ist, dass an einer angeschlossenen Lampe, die nicht gezündet ist, eine Zündspannung erzeugt wird, die zur Zündung der Lampe geeignet ist. Bevorzugt wird zur Erzeugung der Zündspannung die Resonanzfrequenz des Reaktanznetzwerks angeregt. Im einfachsten Fall ist dies die Resonanzfrequenz der Serienschaltung aus Lampendrossel und Resonanzkondensator. Trifft die Schwingfrequenz des Halbbrückenwechselrichters die Resonanzfrequenz des Reaktanznetzwerks, so trägt ein elektronischer Schalter den Laststrom für jeweils ein Viertel der Periodendauer der Resonanzfrequenz. Falls die Ein-Zeit ab dem Nulldurchgang des Laststroms gezählt wird, so schwingt der Halbbrückenwechselrichter auf der Resonanzfrequenz falls die Ein-Zeit ein Viertel der Periodendauer der Resonanzfrequenz beträgt. Wird das Triggersignal bereits vor dem Nulldurchgang des Laststroms gesendet, so verlängert sich die Ein-Zeit entsprechend. Nicht berücksichtigt bei dieser Betrachtung sind Speicherzeiten von Bipolartransistoren, die in der Halbbrückenanordnung eingesetzt werden. Die Ein-Zeit ist gegebenen Falls um die Speicherzeit zu verkürzen. Um eine Schaltentlastung der elektronischen Schalter zu erreichen, muss der Halbbrückenwechselrichter im sog. induktiven Betrieb arbeiten. Das heißt die Schwingfrequenz des Halbbrückenwechselrichters muss höher liegen als die Resonanzfrequenz. Demgemäß muss die Ein-Zeit auch kürzer gewählt werden als sie zum genauen Erreichen der Resonanzfrequenz nötig wäre.

Je näher die Schwingfrequenz des Halbbrückenwechselrichters bei der Resonanzfrequenz liegt, desto höher ist die Zündspannung die erreicht wird. Allerdings stellt die Belastbarkeit der Schaltungsanordnung eine Grenze dafür dar, wie nahe an der Resonanzfrequenz die Schwingfrequenz liegen darf. Um eine möglichst hohe Zündspannung zu erreichen ohne die Schaltungsanordnung zu überlasten wird der Strom durch die Halbbrückenanordnung oder der Laststrom von einer Schwellwerteinrichtung erfasst. Überschreitet der erfasste Strom einen Stromgrenzwert, so erzeugt die Schwellwerteinrichtung ein Interruptsignal, das einem Interrupteingang des Timers zugeführt wird. Der Interrupteingang des Timers ist so ausgelegt, dass die Ein-Zeit sofort abgebrochen wird, sobald der Timer ein Interruptsignal empfängt. Das heißt der Timer wechselt das Stoppsignal sofort in den Aus-Zustand. Damit wird erreicht, dass sich die Schwingfrequenz der Resonanzfrequenz nur so nahe kommt, wie es die Belastbarkeit der Schaltungsanordnung zulässt und andererseits diese Belastbarkeitsgrenze auch ausgereizt wird, um eine möglichst hohe Zündspannung zu erreichen.

Zusätzlich zum Zündbetrieb kann die Startbetrieb auch einen Vorheizbetrieb enthalten. Im Vorheizbetrieb sollen vor dem Zündbetrieb Elektrodenwendeln einer angeschlossenen Lampe auf eine Temperatur gebracht werden, bei der eine wendelschonende Zündung erfolgen kann. Die Ablaufsteuerung schaltet dazu vor dem Zündbetrieb den Wahlschalter so, dass eine zweite Einrichtung zur Zeitvorgabe mit dem Timer gekoppelt wird. Dadurch wird der Timer veranlasst eine feste Ein-Zeit einzustellen, die für die Vorheizung der Elektroden-Wendeln geeignet ist. Diese Ein-Zeit muss eine Schwingfrequenz zur Folge haben, die so weit von der Resonanzfrequenz entfernt ist, dass an der Lampe keine Spannung anliegt, die zu einer Zündung führt. Versuche haben gezeigt, dass dies dann der Fall ist, wenn die Schwungfrequenz über dem 1,5-fachen der Resonanzfrequenz liegt.

Besonders Vorteilhaft ist die vorliegende Erfindung beim Einsatz von Bipolartransistoren in der Halbbrückenanordnung. Dem liegen zwei Aspekte zugrunde: Zum einen sind Bipolartransistoren kostengünstiger als gleichwertige elektronische Schalter wie MOSFET oder IGBT. Zum anderen muss zur Ansteuerung von Bipolartransistoren ein hoher Strom zur Verfügung gestellt werden. Diese Problem wird bei der vorliegenden Erfindung damit gelöst, dass der Strom zur Ansteuerung der Bipolartransistoren dem Lastkreis entnommen wird. Trotzdem ermöglicht die erfindungsgemäße Schaltungsanordnung eine Regelung von Lampenbetriebsgrößen über die Schwingfrequenz.

Da in letzter Zeit leistungsstarke LEDs (Light Emitting Diodes) Betriebsströme aufweisen, die deutlich über 0,1 A liegen, gewinnt auch für LEDs die Erfindung an Bedeutung. Unter einer Lampe ist deshalb bei der vorliegenden Erfindung auch eine LED zu verstehen.

### Kurze Beschreibung der Zeichnungen

Im folgenden soll die Erfindung anhand von Ausführungsbeispielen unter Bezugnahme auf Zeichnungen näher erläutert werden. Es zeigen:
- Figur 1: ein Blockschaltbild einer erfindungsgemäßen Schaltungsanordnung,
- Figur 2: einen Schaltplan einer erfindungsgemäßen Schaltungsanordnung mit Leistungsfaktor-Korrektur,
- Figur 3 a: den zeitlichen Verlauf von charakteristischen Spannungsverläufen einer erfindungsgemäßen Schaltungsanordnung.

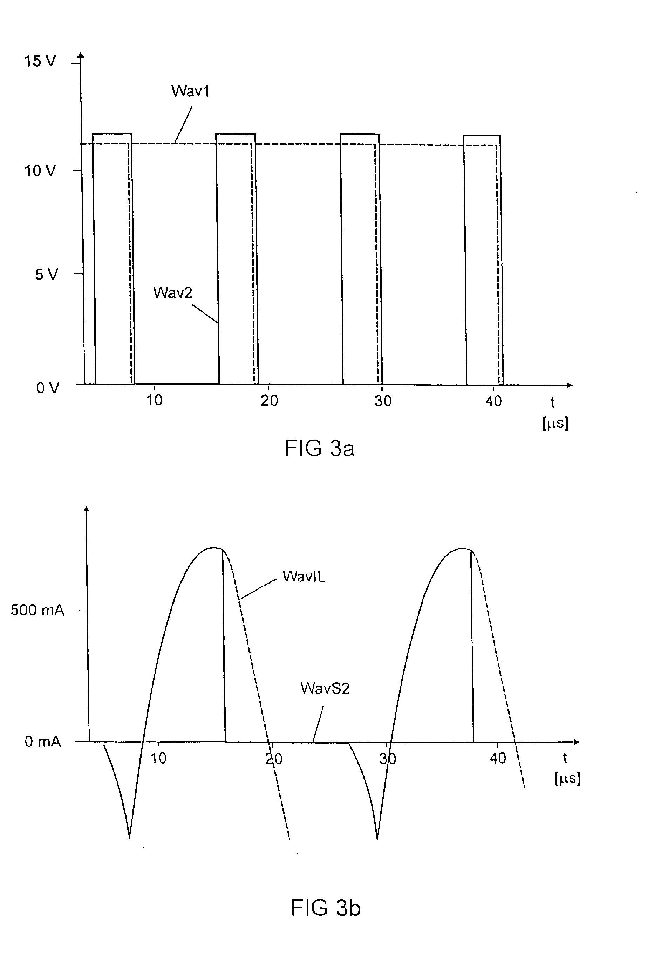

- Figur 3 b: den zeitlichen Verlauf von charakteristischen Stromverläufen einer erfindungsgemäßen Schaltungsanordnung.

Im folgenden werden Widerstände durch den Buchstaben R, elektronische Schalter durch den Buchstaben S, Dioden durch den Buchstaben D, Kondensatoren durch den Buchstaben C, Knoten durch den Buchstaben N, Transformatoren durch den Buchstaben T und Drosseln und Wicklungen durch den Buchstaben L jeweils gefolgt von einer Zahl bezeichnet. Auch werden im folgenden für gleiche und gleichwirkende Elemente der verschiedenen Ausführungsbeispiele durchweg gleiche Bezugszeichen verwendet.

### Bevorzugte Ausführung der Erfindung

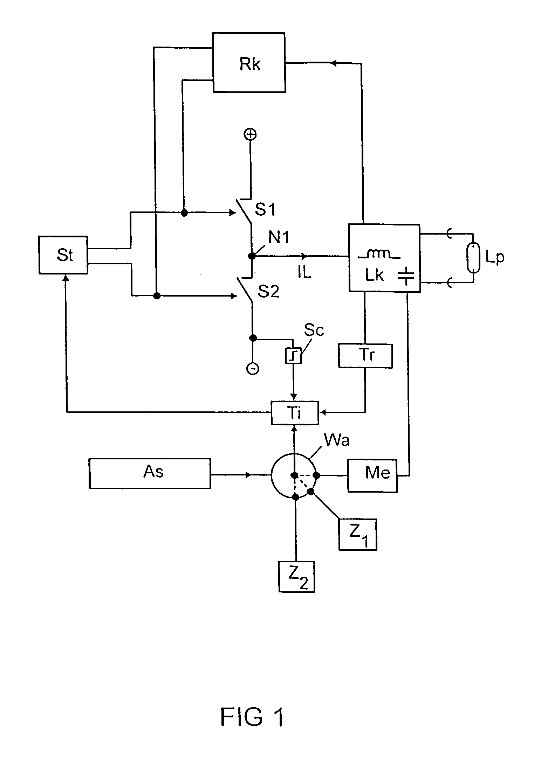

In Figur 1 ist ein Blockschaltbild einer erfindungsgemäßen Schaltungsanordnung dargestellt. Ein oberer und ein unterer elektronischer Schalter S1, S2 sind in Serie geschaltet und bilden eine Halbbrückenanordnung. S 1 und S2 bilden an ihrem Verbindungspunkt einen Mittelpunkt N1, an den ein Lastkreis Lk angeschlossen ist, in den ein Laststrom IL fließt. Auf die Darstellung von Freilaufdioden parallel zu S 1 und S2 wurde der Übersichtlichkeit wegen verzichtet. Der Lastkreis Lk enthält ein Reaktanznetzwerk mit einer Resonanzfrequenz, an das eine Lampe Lp anschließbar ist. Das Reaktanznetzwerk ist durch eine Drossel und einen Kondensator schematisch angedeutet. Das Reaktanznetzwerk ist nötig zur Anpassung des Quellwiderstandes der Halbbrückenanordnung an den Lastwiderstand, der durch die Lampe Lp gebildet wird. Gasentladungslampen benötigen eine Leistungsversorgung, die den Charakter einer Stromquelle hat, während die Halbbrückenanordnung von einer Spannungsquelle gespeist wird, wie durch das eingekreiste Plus- und Minuszeichen angedeutet ist.

Für eine Schwingung, d. h. ein abwechselndes Ein- und Ausschalten von S 1 und S2, sorgt eine Rückkoppeleinrichtung Rk. Sie entnimmt dem Lastkreis Lk Energie und führt sie den Steuereingängen der elektronischen Schalter S1, S2 zu. Meist handelt es sich bei der Rückkoppeleinrichtung Rk um einen Transformator. Es ist jedoch auch eine kapazitive Rückkopplung möglich.

Erfindungsgemäß umfasst die Schaltungsanordnung eine Stopp-Einrichtung St, die in Figur 1 parallel zur Rückkoppeleinrichtung Rk auf die Steuereingänge der elektronischen Schalter S1, S2 geschaltet ist. Damit kann die Stopp-Einrichtung St die Ansteuerung von S 1 und S2 durch kurzschließen der Steuersignale unterbinden. Diese Wirkung der Stopp-Einrichtung St kann auch anders erzielt werden. Beispielsweise durch Kurzschließen des Eingangs der Rückkoppeleinrichtung Rk oder durch Auftrennen der Ein- oder Ausgänge der Rückkoppeleinrichtung Rk. Insbesondere bei Bipolartransistoren ist ein Kurzschließen der Steuersignale vorteilhaft, da damit ein schnelleres Ausschalten und ein besseres Sperrverhalten verbunden sind. Der Eingriff der Stopp-Einrichtung St braucht nicht zwingend an den Steuereingängen von S 1 oder S2 erfolgen. Beispielsweise kann der Eingriff über einen MOSFET auf den Emitter eines Bipolartransistors erfolgen, was als Kaskodeschaltung bekannt ist.

Die Stopp-Einrichtung St weist einen Eingang auf, worüber sie von einem Timer Ti gesteuert wird. Der Timer Ti liefert ein Stoppsignal, das einen Ein- und einen Aus-Zustand einnehmen kann. Liegt an der Stopp-Einrichtung St ein Stoppsignal im Aus-Zustand an, so unterbindet die Stopp-Einrichtung St über ihre Ausgänge eine Ansteuerung von S 1 und S2.

Der Timer Ti besitzt 3 Eingänge. Ein Eingang ist mit einer Triggereinrichtung Tr verbunden. Sobald die Triggereinrichtung ein Triggersignal an den Timer Ti sendet, gibt der Timer Ti an die Stopp-Einrichtung St für die Dauer einer Ein-Zeit ein StoppSignal im Ein-Zustand aus und wechselt danach wieder in den Aus-Zustand. Die Funktion des Timer Ti kann demnach durch ein Monoflop realisiert werden. Es ist jedoch auch möglich diese Funktion durch Software in einem Microcontroller zu realisieren.

Wie oben erläutert, muss der Trigger Tr ein Triggersignal innerhalb der Freilaufphase erzeugen. Dazu ist er mit dem Lastkreis gekoppelt. Das Triggersignal kann nun entweder aus dem Laststrom IL, der Spannung an N1 oder davon abgeleiteten Größen durch Vergleich mit einer Vergleichsgröße in bekannter Weise abgeleitet werden.

Ein zweiter Eingang des Timers Ti ist mit einer Schwellwerteinrichtung Sc gekoppelt. Die Schwellwerteinrichtung Sc sendet an den Timer Ti ein Interruptsignal das den Timer Ti dazu veranlasst das Stoppsignal sofort in den Aus-Zustand zu schalten. Damit werden S 1 bzw. S2 abgeschaltet, bevor die Ein-Zeit abgelaufen ist. Damit wird verhindert, dass die Schwingfrequenz in einen Bereich absinkt, in dem sich starke Resonanzüberhöhungen von Strömen und Spannungen einstellen. Diese Funktion kann durch einen Reset des oben erwähnten Monoflops realisiert werden. Wiederum ist auch die Realisierung durch Software in einem Microcontroller möglich. In Figur 1 vergleicht die Schwellwerteinrichtung Sc den Strom im Schalter S2 mit einem vorgegebenen Referenzwert. Wird er überschritten, so sendet die Schwellwerteinrichtung Sc ein Interruptsignal. Der Eingang der Schwellwerteinrichtung Sc kann aber auch andere elektrische Größen des Lastkreises zur Detektion starker Resonanz heranziehen. Beispielsweise kann die Spannung an den Lampenklemmen dazu dienen.

Über den dritten Eingang des Timers Ti kann die Ein-Zeit eingestellt werden. Ein Wahlschalter Wa, der von einer Ablaufsteuerung As gesteuert wird. Die Stellung des Wahlschalters Wa bestimmt, welche Einrichtung der Schaltungsanordnung die Ein-Zeit festlegt.

Der Timer Ti kann auch eine weitere Einstellmöglichkeit für die Ein-Zeit aufweisen, die temperaturabhängig ist. Übersteigt eine gemessene Temperatur einen vorgegebenen Wert kann somit die Ein-Zeit verkürzt werden, was zu einer reduzierten Lampenleistung und somit Verlustleitung der Schaltungsanordnung führt. Ein Ausfall der Schaltungsanordnung durch Überhitzen kann somit verhindert werden. Die Temperaturabhängigkeit der Lampenleistung kann auch dazu benutzt werden, die Lampenleistung im Hinblick auf den Lampenwirkungsgrad für gegebene Temperaturbedingungen zu optimieren.

Bei der Inbetriebnahme der Schaltungsanordnung stellt die Ablaufsteuerung As den Wahlschalter Wa in eine Stellung in der eine zweite Einrichtung zur Zeitvorgabe Z2 mit dem dritten Eingang des Timers Ti gekoppelt ist. Damit wird eine feste Ein-Zeit eingestellt, bei der eine Vorheizung von Elektrodenwendeln ermöglicht wird. Dieser Vorheizbetrieb kann von der Ablaufsteuerung As für eine feste Vorheizeit von ca. lsec beibehalten. Die Ablaufsteuerung kann auch mit Daten über den Zustand der Elektrodenwendeln gespeist werden, womit eine Regelung der Vorheizzeit möglich ist.

Nach der Vorheizzeit wechselt die Ablaufsteuerung As für die Dauer einer Zündzeit in den Zündbetrieb. Im Zündbetrieb koppelt der Wahlschalter Wa eine erste Einrichtung zur Zeitvorgabe Z1 mit dem dritten Eingang des Timers Ti. Damit ergibt sich eine Ein-Zeit, die in einer Schwingfrequenz nahe der Resonanzfrequenz resultiert. Daraufhin stellt sich an den Lampenklemmen eine Zündspannung ein, die gegebenenfalls in ihrer Höhe von der Schwellwerteinrichtung Sc geregelt wird. Die Ablaufsteuerung As kann die Zündzeit entweder fest vorgeben oder mit Hilfe einer Detektionseinrichtung für eine Lampenzündung beenden.

Nach dem Zündbetrieb wechselt die Ablaufsteuerung As in den Brennbetrieb. Dazu wird der Wahlschalter Wa in eine Stellung gebracht, die den dritten Eingang des Timers Ti mit einer Messeinrichtung Me koppelt. Damit wird ein Regelkreis für einen von der Messeinrichtung Me erfasste Regelgröße geschlossen. Bei dieser Regelgröße kann es sich beispielsweise um den Lampenstrom oder die Lampenleistung handeln. Selbstverständlich sind auch von diesen Größen abhängige Größen als Regelgröße geeignet. Die Messeinrichtung Me kann die Regelgröße mit einer bekannten Regelcharakteristik wie z. B. PID beaufschlagen.

Schließlich kann die Ablaufsteuerung As den Wahlschalter Wa auch in eine Stellung bringen, bei der dem Timer Ti eine Ein-Zeit vom Wert Null vorgegeben wird. Der Halbbrückenwechselrichter ist dann außer Betrieb. Diese Funktion kann bei Fehlerzuständen benutzt werden.

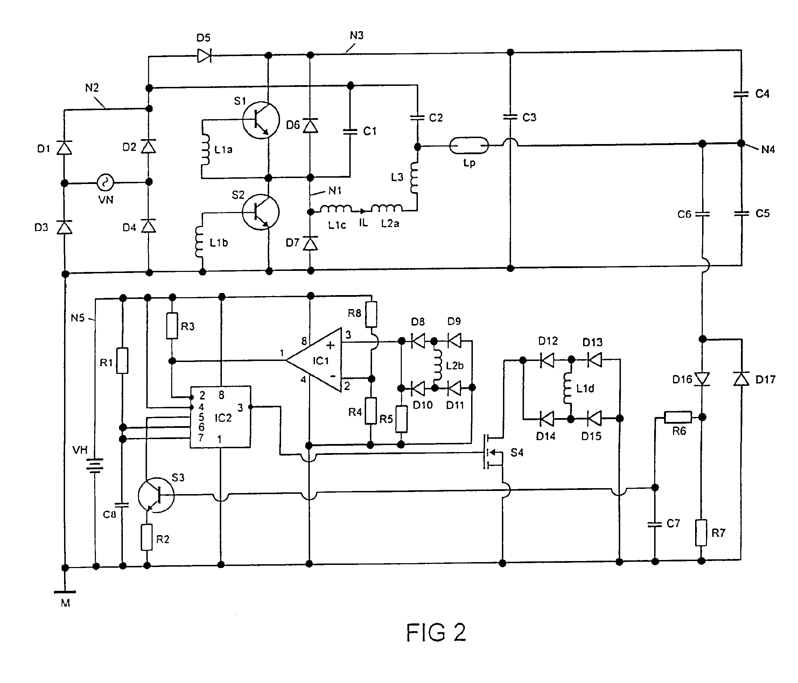

In Figur 2 ist ein Schaltplan einer erfindungsgemäßen Schaltungsanordnung mit Leistungsfaktor-Korrektur dargestellt. Die Leistungsfaktor -Korrektur ist mittels einer Ladungspumpe realisiert. Die Ladungspumpe spielt unter technischen Gesichtspunkten eine untergeordnete Rolle für die vorliegende Erfindung. Da die vorliegende Erfindung wie auch die Ladungspumpe Kostenvorteile gegenüber anderen Schaltungen bringen, ist deren Kombination unter dem gewerblichen Gesichtspunkt vorteilhaft. Bezüglich der technischen Erläuterungen zur Ladungspumpe wird auf die Schrift EP 1 443 807 (Rudolph) verwiesen.

Im Beispiel nach Fig. 2 ist die Schaltungsanordnung an eine Netzspannung VN angeschlossen, die Energie für die Lampe liefert. Ein Vollbrückengleichrichter bestehend aus den Dioden D1, D2 D3 und D4 stellt die gleichgerichtete Netzspannung zwischen einem Knoten N2 und einem zur Verfügung. Eine Pumpdiode D5 verbindet N2 mit einem Knoten N3 an dem eine Versorgungsspannung gegenüber dem Bezugsknoten M für einen Halbbrückenwechselrichter anliegt. Zwischen N3 und M ist ein Speicherkondensator C3 geschaltet, der zur Stabilisierung der Versorgungsspannung dient.

Zwischen N3 und M ist eine Halbbrückenanordnung geschaltet, bestehend aus der Serienschaltung zweier elektronischer Schalter S 1 und S2. S 1 ist mit N3 verbunden und stellt einen oberen elektronischer Schalter dar; S2 ist mit M verbunden und stellt den unteren elektronischen Schalter dar. Parallel zu S 1 und S2 ist jeweils eine Freilaufdiode D6 und D7 geschaltet. Am Verbindungspunkt zwischen S 1 und S2 liegt der Knoten N1, der den Mittelpunkt der Halbbrückenanordnung bildet. Zwischen N1 und N2 ist ein Snubberkondensator C 1 geschaltet, der zur oben genannten Ladungspumpe beiträgt.

Zwischen N3 und M ist auch die Serienschaltung zweier Koppelkondensatoren C4, C5 geschaltet, die an Ihrem Verbindungspunkt einen Knoten N4 bildet. Einer der Kondensatoren C4 und C5 kann entfallen, falls keine Anforderungen an die Symmetrie der Schaltungsanordnung gestellt wird.

Zwischen N1 und N4 stellt die Halbbrückenanordnung eine rechteckförmige gegenüber einer Netzfrequenz hochfrequente Wechselspannung zum Betrieb einer Lampe Lp bereit. Der von N4 abgewandte Anschluss der Lampe Lp ist über einen Resonanzkondensator C2 mit dem Knoten N2 verbunden. Auch der Resonanzkondensator C2 trägt zur Ladungspumpe bei.

In Serie zur Lampe ist die Serienschaltung von drei induktiven Bauteilen geschaltet: Eine Lampendrossel L3, die Primärwicklung L1c eines Rückkoppel-Transformators T1 und die Primärwicklung L2a eines Stromübertragers T2. L3 bildet zusammen mit C2 das Reaktanznetzwerk. Im vorliegenden Beispiel enthält der Lastkreis außer dem Reaktanznetzwerk lediglich die Koppelkondensatoren C4 und C5. Der Lastkreis kann zusätzlich auch Mittel zur Vorheizung von Elektrodenwendeln und zur Zündung enthalten.

Der Rückkoppel-Transformators T 1 besitzt zwei Sekundärwicklungen L 1a und L1b, die jeweils mit den Steuereingängen der elektronischen Schalter S 1 und S2 gekoppelt sind. Im vorliegenden Beispiel ist L1a und L1b jeweils parallel zur Basis-Emitterstrecke von S 1 und S2 geschaltet. Der Wickelsinn der Wicklungen von T1 ist so gewählt, dass sich durch die durch T1 gebildete Rückkopplung eine stationäre Schwingung der Halbbrückenanordnung ergibt. Mittel zum Starten der Schwingung sind bekannt und nicht dargestellt.

Zusätzlich zu den drei beschrieben Wicklungen von T1 besitzt T1 eine vierte Wicklung L1d. Sie ist mit den Wechselspannungs-Anschlüssen eines VollbrückenGleichrichters gekoppelt, der von Dioden D12, D 13, D 14 und D 15 gebildet wird. Die Gleichspannungs-Anschlüsse dieses Gleichrichters liegen parallel zu einen elektronischen Schalter S4. L1d, der Gleichrichter und S4 bilden eine Stoppeinrichtung. Bei S4 handelt es sich um einen MOSFET, der mit dem Sourceanschluss mit dem Bezugspotenzial M verbunden ist. Sobald am Gate von S4 ein Stoppsignal anliegt, das einem Aus-Zustand entspricht, schließt S4 über den Gleichrichter L1d kurz. Damit werden über T 1 auch die Steuereingange der elektronischen Schalter S 1 und S2 kurzgeschlossen und damit ausgeschaltet.

Gesteuert wird S4 von einem Timer IC2. Für IC2 kann dar weit verbreitete Timer-Schaltkreis 555 eingesetzt werden. IC2 stellt das Stoppsignal an Pin 3 zur Verfügung. Um die richtige Polung zur Ansteuerung von S4 zu erreichen muss das Signal an Pin3 invertiert werden. Dies ist, wie allgemein üblich, durch einen großen Punkt gekennzeichnet.

Zur Energieversorgung von IC2 ist eine Spannungsquelle VH zwischen einem Knoten N5 und dem Bezugspotenzial M vorgesehen. Diese Spannungsquelle kann als separates Netzteil ausgebildet sein, das seine Energie aus der Netzspannung VN bezieht. Es ist auch üblich, den Halbbrückenwechselrichter der Schaltungsanordnung so zu erweitern, dass eine Versorgungsspannung für IC2 zur Verfügung gestellt werden kann. Pin 8 von IC2 ist mit N5 und Pin1 mit dem Bezugspotenzial M verbunden, um IC2 mit Energie zu versorgen.

Die Serienschaltung eines Widerstands R1 und eines Kondensators C8 bildet eine Zeitkonstante, die zwischen N5 und M geschaltet ist. Der Verbindungspunkt zwischen R1 und C8 ist mit Pin 6 und Pin 7 von IC2 verbunden, um dem Timer eine Zeitkontstante vorzugeben. Pin 4 bildet einen Reset-Eingang und muss mit der positive Betriebsspannung von IC2 verbunden werden, damit sich die gewünschte Funktionalität von IC 2 einstellt.

Pin 2 von IC2 bildet einen Triggereingang und ist zunächst über einen Widerstand R3 mit N5 verbunden. Zum Auslösen des Timers ist an Pin 2 ein negativer Impuls nötig. Dieser wird vom IC 1 geliefert. IC1 ist ein als Komparator eingesetzter Operationsverstärker, wofür beispielsweise der Baustein LM 293 eingesetzt werden kann. An Pin1 von IC1 werden die Triggerimpulse an Pin 2 von IC2 geliefert. Pin 8 und Pin 4 von IC 1 dienen der Energieversorgung und sind mit N5 und M verbunden. Pin 2 von IC 1 bildet den invertierenden Eingang und ist über einen Widerstand R8 mit N5 und über einen Widerstand R4 mit M verbunden. Die Werte von R4 und R8 sind so gewählt, dass an Pin 2 im wesentlichen das Bezugspotenzial M anliegt.

Der nicht invertierende Eingang von IC 1 wird gespeist vom Gleichspannungsausgang eines Vollbrückengleichrichters, der gebildet wird von Dioden D8, D9, D10 und D11. An den Wechselspannungseingang dieses Vollbrückengleichrichters ist die Sekundärwicklung L2b des Stromübertragers T2 geschaltet. Der Gleichspannungsausgang des Vollbrückengleichrichters ist niederohmig mit einem Widerstand R5 abgeschlossen. Damit liegt am nicht invertierenden Eingang von IC 1 eine Spannung an, die proportional zum gleichgerichteten Laststrom ist. Beim Nulldurchgang des Laststroms ist die Spannung am invertierenden Eingang des IC 1 kurzzeitig größer als die Spannung am nicht invertierenden Eingang. Dadurch ergibt sich am Pin 1 des IC1 ein negativer Triggerimpuls. IC1, R4, R5, R8, D8, D9, D10, D11, L2a und L2b bilden somit die Triggereinrichtung. Sobald der Laststrom einen Nulldurchgang aufweist, wird der Timer getriggert und gibt schaltet für die Ein-Zeit den Transistor S4 ab, wodurch die Ansteuerung von S 1 und S2 freigegeben wird.

Die Dauer der Ein-Zeit wird über Pin 5 des Timers eingestellt. Dort ist der Bipolartransistor S3 mit seinem Kollektor angeschlossen. Der Emitter von S3 ist über einen Widerstand R2 mit M verbunden. Die Basis von S3 wird mit dem Potenzial eines Kondensators C7 angesteuert, das proportional zum Lampenstrom ist. Die Information über den Wert des Lampenstroms wird am Knoten N4 abgegriffen. Dort bilden die Kondensatoren C4, C5 und C6 einen kapazitiven Stronteiler. Die positive Halbwelle des Anteils des Lampenstroms durch C6 wird über eine Diode D16 einen Messwiderstand R7 geleitet und über einen Widerstand R6 auf C7 integriert. Die negative Halbwelle des Lampenstroms durch C6 fließt durch eine Diode D17, die parallel zu D16 und R7 geschaltet ist.

Sobald nun der Lampenstrom ansteigt, steigt die Spannung an C7. Damit wird S3 stärker angesteuert, wodurch Pin 5 von IC2 mit einem niedrigeren Widerstandswert an das Bezugspotenzial M gebunden ist. Dies führt zu einer Reduzierung der Ein-Zeit und damit zu einer Erhöhung der Schwingfrequenz der Halbbrückenanordnung. Die höhere Schwingfrequenz bewirkt mittels der Lampendrossel L3 einen sinkenden Lampenstrom, wodurch der Regelkreis geschlossen ist.

Das Blockschaltbild in Figur 1 offenbart eine Ablaufsteuerung mit der Vorheizung und Zündung der Lampe realisiert werden. Dies ist im Ausführungsbeispiel nach Figur 2 nicht dargestellt. Durch den Einsatz eines Microcontrollers ist die Realisierung dieser Ablaufsteuerung für den Fachmann möglich, ohne erfinderisch zu sein. Auch der Timer kann durch den Microcontroller realisiert werden.

Auch nicht dargestellt ist in Figur 2 der Schwellwertschalter, der die Zündspannung begrenzt.

Die Figuren 3a und 3b zeigen den zeitlichen Verlauf von charakteristischen Betriebsgrößen einer erfindungsgemäßen Schaltungsanordnung gemäß Figur 2. In Figur 3a ist der zeitliche Verlauf des Triggersignals Wav1 und des Stoppsignals Wav2 dargestellt.

Das Triggersignal Wav1 liegt am Ausgang des IC1 an. Das Triggersignal Wav1 liegt in einem Ruhezustand auf dem Wert der Spannungsquelle VH von 12V. Sobald der Laststrom näherungsweise Null wird ein Triggerereignis dadurch angezeigt, dass das Triggersignal Wavl kurze Zeit zu Null wird. Das Triggersignal Wavl ist also als aktiv zu werten, wenn es zu Null wird. Dies ist dadurch begründet, dass der Triggereingang 2 des IC2 invertiert ist.

Das Triggerereignis löst beim Stoppsignal Wav2 einen Wechsel in den Ein-Zustand aus. Der Ein-Zustand ist im Ausführungsbeispiel nach Figur 2 dann gegeben, wenn das Stoppsignal Wav2 den Wert Null aufweist. Nach einer Ein-Zeit von ca. 7,3 Mikrosekunden wechselt das Stoppsignal in den Aus-Zustand der im Beispiel einem Spannungswert von 12 Volt entspricht. Insgesamt ist eine Schwingfrequenz des Halbbrückenwechselrichters von ca. 46 kHz ablesbar.

In Figur 3b ist der zeitliche Verlauf WavS2 des Kollektor-Stroms von S2 und der zeitliche Verlauf WavIL des Laststroms IL dargestellt. In jeder zweiten Periode des Stoppsignals Wav2 deckt sich der Laststrom WavIL und Schalterstrom WavS2 während der Ein-Zeit. In den dazwischen liegenden Perioden deckt sich während der Ein-Zeit der Laststrom WavIL mit dem nicht dargestellten Schalterstrom von S1.

Deutlich ist zu erkennen, wie zum Ende der Ein-Zeit der Schalterstrom abrupt abbricht, da durch das in den Aus-Zustand wechselnde Stoppsignal die Ansteuerung von S2 unterbrochen wird. Der Laststrom WavIL fließt aber während anschließenden Umschwingzeit und Freilaufphase weiter. Die Freilaufphase ist durch den negativen Schalterstrom WavS2 gekennzeichnet. Trotz der Freilaufdioden fließt durch die in Flussrichtung gepolte Kollektor-Basis Diode von S2 ein negativer Kollektorstrom.

Deutlich ist zu erkennen wie gegen Ende der Freilaufphase ein Triggerimpuls beim Triggersignal Wav 1 ausgelöst wird.

## Patentansprüche

1. Schaltungsanordnung zum Betreiben von Lampen (Lp) mit folgenden Merkmalen:
• Halbbrückenanordnung, die einen oberen und einen unteren elektronischen Schalter (S1, S2) aufweist, die in Serie geschaltet sind, jeweils einen Steueranschluss aufweisen und an ihren Verbindungspunkt einen Mittelpunkt (N1) bilden,
• am Mittelpunkt (N1) ist ein Lastkreis (Lk) angeschlossen, in den ein Laststrom (IL, WavIL) fließt,
• der Lastkreis (Lk) enthält ein Reaktanznetzwerk mit einer Resonanzfrequenz, an das eine Lampe (Lp) anschließbar ist,
• der Lastkreis (Lk) ist so bemessen, dass in einem Normalbetrieb für eine angeschlossene Lampe (Lp) nach dem Öffnen eines elektronischen Schalters (S 1, S2) die Spannung am jeweils anderen elektronischen Schalter (S 1, S2) nach einer Umschwing-Zeit zu Null wird,
• die Schaltungsanordnung umfasst eine Rückkoppeleinrichtung (Rk), die eine Rückkoppel-Größe aus dem Lastkreis (Lk) derart mit den Steueranschlüssen der elektronischen Schalter (S1, S2) koppelt, dass die elektronischen Schalter (S1, S2) abwechselnd eingeschaltet werden,
• die Schaltungsanordnung umfasst eine Stopp-Einrichtung (St), die mit den Steueranschlüssen der elektronischen Schalter (S 1, S2) gekoppelt ist und einen Eingang aufweist an dem ein Stoppsignal anliegt, wobei die Stopp-Einrichtung (St) ein Einschalten der elektronischen Schalter verhindert, solange das Stoppsignal (Wav2) einen Aus-Zustand aufweist,
• die Schaltungsanordnung umfasst einen Timer (Ti), der mit dem Eingang der Stopp-Einrichtung (St) gekoppelt ist und das Stoppsignal (Wav2) bereitstellt, das einen Ein-Zustand und den Aus-Zustand annehmen kann,
• die Schaltungsanordnung umfasst eine Triggereinrichtung (Tr), die jeweils nach Ablauf der Umschwing-Zeit ein Triggersignal (Wav1) an den Timer (Ti) abgibt, spätestens jedoch, wenn der Laststrom (IL, WavIL) zu Null wird.
• der Timer (Ti) schaltet das Stoppsignal (Wav2) in den Ein-Zustand, falls er ein Triggersignal (Wav1) empfängt und behält den Ein-Zustand bei für die Dauer einer Ein-Zeit.

2. Schaltungsanordnung nach Anspruch 1, **gekennzeichnet durch** folgende Merkmale:
• die Schaltungsanordnung umfasst eine Messeinrichtung (Me), die in einem Brennbetrieb eine Regelgröße in den Timer (Ti) einkoppelt, die proportional zur Leistung oder zum Strom einer angeschlossenen Lampe (Lp) ist,
• der Timer (Ti) stellt die Ein-Zeit abhängig von der Regelgröße ein.

3. Schaltungsanordnung nach Anspruch 2, **gekennzeichnet durch** folgende Merkmale:
• einen Wahlschalter (Wa), der einen Ausgang besitzt, der so mit dem Timer (Ti) verbunden ist, dass er die Ein-Zeit bestimmen kann,
• der Wahlschalter (Wa) besitzt mindestens zwei Eingänge, wobei in den ersten Eingang die Regelgröße eingekoppelt ist und ein zweiter Eingang mit einer ersten Einrichtung zur Zeitvorgabe (Z1) gekoppelt ist, wobei diese Einrichtung dem Timer die Ein-Zeit für einen Startbetrieb vorgeben kann,
• den Wahlschalter (Wa) steuert eine Ablaufsteuerung so, dass im Brennbetrieb der Ausgang des Wahlschalters (Wa) mit dem ersten Eingang gekoppelt ist und im Startbetrieb der Ausgang des Wahlschalters (Wa) mit dem zweiten Eingang gekoppelt ist.

4. Schaltungsanordnung nach Anspruch 3, **gekennzeichnet durch** folgende Merkmale:
• der Startbetrieb setzt sich aus einem Vorheiz- und einem Zündbetrieb zusammen,
• die erste Einrichtung zur Zeitvorgabe (Z1) gibt dem Timer (Ti) die Ein-Zeit für den Zündbetrieb vor,
• der Wahlschalter besitzt einen dritten Eingang, der mit einer zweiten Einrichtung zur Zeitvorgabe (Z2) gekoppelt ist, wobei diese Einrichtung dem Timer (Ti) die Ein-Zeit für den Vorheizbetrieb vorgibt,
• den Wahlschalter (Wa) steuert eine Ablaufsteuerung so, dass im Zündbetrieb der Ausgang des Wahlschalters mit dem zweiten Eingang gekoppelt ist und im Vorheizbetrieb der Ausgang des Wahlschalters mit dem dritten Eingang gekoppelt ist.

5. Schaltungsanordnung nach Anspruch 3 oder 4, **dadurch gekennzeichnet, dass** die Ein-Zeit für den Start- oder Zündbetrieb so gewählt ist, dass sie kleiner ist als ein Viertel der Periodendauer der Resonanzfrequenz des Reaktanznetzwerks, gerechnet ab dem Nulldurchgang des Laststroms (IL).

6. Schaltungsanordnung nach Anspruch 4, **dadurch gekennzeichnet, dass** die Ein-Zeit für den Vorheizbetrieb so gewählt ist, dass sich für eine Schwingfrequenz der Halbbrückenanordnung ein Wert ergibt, der über dem 1,5-fachen Wert der Resonanzfrequenz des Reaktanznetzwerks liegt.

7. Schaltungsanordnung nach einem der vorigen Ansprüche **gekennzeichnet durch** folgende Merkmale:
• eine Schwellwerteinrichtung (Sc), die den Strom **durch** die Halbbrückenanordnung oder den Laststrom (IL) mit einem Stromgrenzwert vergleicht und ein Interruptsignal abgibt, falls der erfasste Strom größer ist als der Stromgrenzwert,
• der Timer (Ti) besitzt einen Interrupteingang in den das Interruptsignal eingespeist wird,
• sobald am Interrupteingang ein Interruptsignal anliegt, wechselt das Stoppsignal (Wav2) sofort in den Aus-Zustand.

8. Schaltungsanordnung nach einem der vorigen Ansprüche, **dadurch gekennzeichnet, dass** zumindest die Funktion des Timers (Ti) durch einen Microcontroller realisiert ist.

9. Schaltungsanordnung nach einem der vorigen Ansprüche, **dadurch gekennzeichnet, dass** das Reaktanznetzwerk die Serienschaltung einer Lampendrossel (L3) und eines Resonanzkondensators (C2) enthält und Lampen (Lp) parallel zum Resonanzkondensators (C2) koppelbar sind.

10. Schaltungsanordnung nach einem der vorigen Ansprüche, **dadurch gekennzeichnet, dass** die elektronischen Schalter (S1, S2) Bipolartransistoren sind.

11. Schaltungsanordnung nach einem der vorigen Ansprüche, **dadurch gekennzeichnet, dass** die Rückkoppeleinrichtung (Rk) einen Rückkoppeltransformator enthält, dessen Primärwicklung (L1c) in Serie zur Lampendrossel (L3) geschaltet ist und dessen Sekundärwicklungen (L1a, L1b) einen Steuerstrom für die elektronischen Schalter (S 1, S2) liefern.

12. Schaltungsanordnung nach einem der Ansprüche 2 bis 11, **dadurch gekennzeichnet, dass** Regelgröße durch einen Regelverstärker verstärkt wird.

13. Schaltungsanordnung nach einem der vorigen Ansprüche, **gekennzeichnet durch** folgende Merkmale:
• die Schaltungsanordnung umfasst eine Temperaturmesseinrichtung, die eine Temperaturmessgröße in den Timer (Ti) einkoppelt, die proportional zu einer für den Betrieb der Schaltungseinrichtung oder der Lampe relevanten Temperatur ist,
• der Timer (Ti) schaltet das Stoppsignal (Wav2) in den Ein-Zustand, falls er ein Triggersignal (Wav1) empfängt und behält den Ein-Zustand bei für die Dauer einer Ein-Zeit, die der Timer (Ti) abhängig von der Temperaturmessgröße einstellt.

14. Verfahren zum Starten und Betreiben von Lampen (Lp) mit einer Schaltungsanordnung nach Anspruch 4, **gekennzeichnet durch** folgende Schritte:
• für die Dauer einer Vorheizzeit wird die Ein-Zeit so eingestellt, dass die Schwingfrequenz der Halbbrückenanordnung einen Wert aufweist, der über dem 1,5-fachen Wert der Resonanzfrequenz des Reaktanznetzwerks liegt,
• für die Dauer einer Zündzeit wird die Ein-Zeit so eingestellt, dass die Schwingfrequenz der Halbbrückenanordnung einen Wert aufweist, der so nahe beim Wert der Resonanzfrequenz des Reaktanznetzwerks liegt, dass eine angeschlossene Lampe zur Zündung gebracht wird,
• nach der Zündung der Lampe wird die Ein-Zeit **durch** eine Regelgröße geregelt.
